# EUROPÄISCHE PATENTSCHRIFT

(11) **EP 4 126 636 B1**
(45) Veröffentlichungstag und Bekanntmachung des Hinweises auf die Patenterteilung: **12.11.2025**
(21) Anmeldenummer: 21713006.1
(22) Anmeldetag: 18.03.2021
(51) Int. Cl.: B62D 1/181, B62D 1/189

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 25.03.2020 DE 102020203827
(43) Veröffentlichungstag der Anmeldung: 08.02.2023
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH)
(74) Vertreter: thyssenkrupp Intellectual Property GmbH
(86) Internationale Anmeldenummer: PCT/EP2021/056957
(87) Internationale Veröffentlichungsnummer: WO 2021/191047

(56) Entgegenhaltungen:
- WO-A1-2018/172275
- WO-A1-2018/172275
- WO-A1-2020/035364
- WO-A1-2020/035364
- US-A1- 2018 086 363
- US-A1- 2018 086 363

## Beschreibung

### Stand der Technik

Die Erfindung betrifft eine Lenksäule für ein Kraftfahrzeug, umfassend eine Manteleinheit, in der eine Lenkspindel um eine Längsachse drehbar gelagert ist und die über einen Höhenverstellhebel mit der Karosserie eines Kraftfahrzeugs direkt oder indirekt verbindbar ist, wobei der Höhenverstellhebel zwei Seitenwangen aufweist, zwischen deren einander bezüglich der Längsachse gegenüberliegenden Innenseiten die Manteleinheit um eine Gelenkachse verschwenkbar aufgenommen ist, wobei zwischen der Manteleinheit und jeder Seitenwange ein Gleitkörper verspannbar angeordnet ist, der in einer korrespondierenden Führungsnut in Richtung der Längsachse gleitend verschiebbar gehalten und von einer Spanneinrichtung mit mindestens einem Spannelement in einer Spannrichtung verspannt ist, wobei jeder der Gleitkörper einzeln mit einem separaten Spannelement in der korrespondierenden Führungsnut verspannbar ist, und wobei ein Spannelement eine Seitenwange des Höhenverstellhebels durchsetzt.

Zur Anpassung der Lenkradposition an die Sitzposition des Fahrers eines Kraftfahrzeugs sind verstellbare Lenksäulen in unterschiedlichen Ausführungsformen im Stand der Technik bekannt. Das am hinteren Ende der Lenkspindel angebrachte Lenkrad kann bei gattungsgemäßen Lenksäulen durch eine Höhenverstellung quer zur Richtung der Lenkspindel-Längsachse nach oben oder unten im Fahrzeuginnenraum positioniert werden.

Zur Höhenverstellung ist die Manteleinheit in ihrem in Fahrtrichtung vorderen, bezogen auf die Lenkradposition unteren Endbereich um eine horizontal, und damit quer zur Längsachse liegende Höhenverstellachse verschwenkbar an der Karosserie gelagert. Die Verstellbewegung wird von einem Verstellantrieb, beispielsweise einem elektromotorisch angetriebenen Spindeltrieb, über einen Höhenverstellhebel auf die Manteleinheit übertragen, wie beispielsweise in der US 2018/0086363 A1 beschrieben.

Der Verstellantrieb greift eingangsseitig an dem Höhenverstellhebel an, der um eine Schwenkachse verschwenkbar an einer karosseriefest anbringbaren Trageinheit gelagert ist. Bezüglich der Schwenkachse ausgangsseitig ist der Höhenverstellhebel über eine Gelenkachse an der Manteleinheit angelenkt. Die Gelenkachse erstreckt sich quer zur Längsachse durch zwei nach unten vorstehende Seitenwangen des im Querschnitt U-förmigen Höhenverstellhebels, zwischen denen die Manteleinheit gehalten ist.

Dadurch, dass die Schwenkachse des Höhenverstellhebels Abstand zur Höhenverstellachse der Manteleinheit hat, verlagert sich bei der Höhenverstellung die Gelenkachse in Richtung der Längsachse translatorisch relativ zur Höhenverstellachse.

Zum Ausgleich dieser translatorischen Verlagerung ist in der US 2018/0086363 A1 vorgeschlagen worden, zwischen dem Höhenverstellhebel und der Manteleinheit eine Ausgleichsführung auszubilden, welche beim Verstellen eine lineare Ausgleichsbewegung der Gelenkachse relativ zur Manteleinheit in Richtung der Längsachse ermöglicht.

Die bekannte Ausgleichführung umfasst zwei außen an der Manteleinheit in Richtung der Längsachse erstreckte Führungsnuten, welche auf entgegengesetzten Außenseiten jeweils mit ihrer Öffnung der Innenseite einer Seitenwange zugewandt angeordnet sind. Zwischen den Seitenwangen und der Manteleinheit sind in den als Keilnuten ausgebildeten Führungsnuten korrespondierende, keilförmige Gleitkörper in Längsrichtung gleitend verschiebbar angeordnet. Ein in Richtung der Gelenkachse durchgehender Gelenkbolzen erstreckt sich durch beide Seitenwangen, in Richtung der Längsachse verlaufende Langlöcher in den Führungsnuten und beide Gleitkörper hindurch. Dadurch sind die Gleitkörper in den Führungsnuten verschiebbar, und in Richtung der Längsachse an den Seitenwangen abgestützt.

Um die Steifigkeit der Lenksäule zu gewährleisten, muss die Gleitführung möglichst spielfrei eingestellt sein. Dies kann dadurch erreicht werden, dass die Gleitkörper mit einer vorgegebenen, möglichst gleichbleibenden Spannkraft von außen in die Führungsnuten gedrückt, d.h. verspannt werden.

In der genannten US 2018/0086363 A1 kann die Spannkraft dadurch eingestellt werde, dass durch das als Schraubbolzen ausgebildete Spannelement, welches den Gelenkbolzen bildet, die beiden Seitenwangen nach Art einer Schraubzwinge gegeneinander, und damit gegen die Manteleinheit verspannt werden. Dadurch werden die Gleitkörper zwischen den Seitenwangen und der Manteleinheit in den Führungsnuten verspannt. Nachteilig daran ist, dass beim Verspannen der Höhenverstellhebel in sich zusammengedrückt wird, und durch die dabei auftretende elastische Rückstellkraft die Vorspannkraft zwischen den Gleitkörpern und den Führungsnuten nicht ausreichend genau einstellbar ist. Außerdem reagiert die Vorspannkraft durch die starre Verspannung empfindlich auf Maßtoleranzen und wechselnde Betriebsbedingungen, wodurch die Qualität der Führung beeinträchtigt wird. Weiterhin nimmt die Vorspannkraft auf Grund von Alterungseffekten des Höhenverstellhebels an den Gleitkörpern und den korrespondierenden Kontaktflächen, mit denen der Gleitkörper zusammenwirkt, über die Lebensdauer stark ab.

Eine Lenksäule der eingangs genannten Art ist aus der WO 2020/035364 A1 bekannt. Diese erfordert durch die Abstützung der Spannkraft belastbare und formsteife Seitenwangen, und die Führungseinrichtung ist relativ breit.

Angesichts der vorangehend erläuterten Problematik ist es eine Aufgabe der vorliegenden Erfindung, eine Lenksäule mit einer verbesserten Führung anzugeben.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Manteleinheit, in der eine Lenkspindel um eine Längsachse drehbar gelagert ist und die über einen Höhenverstellhebel mit der Karosserie eines Kraftfahrzeugs direkt oder indirekt verbindbar ist, wobei der Höhenverstellhebel zwei Seitenwangen aufweist, zwischen deren einander bezüglich der Längsachse gegenüberliegenden Innenseiten die Manteleinheit um eine Gelenkachse verschwenkbar aufgenommen ist, wobei zwischen der Manteleinheit und jeder Seitenwange ein Gleitkörper verspannbar angeordnet ist, der in einer korrespondierenden Führungsnut in Richtung der Längsachse gleitend verschiebbar gehalten und von einer Spanneinrichtung mit mindestens einem Spannelement in einer Spannrichtung verspannt ist, wobei jeder der Gleitkörper einzeln mit einem separaten Spannelement in der korrespondierenden Führungsnut verspannbar ist, und wobei ein Spannelement eine Seitenwange des Höhenverstellhebels durchsetzt, ist erfindungsgemäß vorgesehen, dass ein Spannelement einen eine Führungsnut aufweisenden Ansatz der Manteleinheit durchsetzt, wobei der Ansatz die Führungsnut auf seiner Innenseite aufweist.

Jedem der beiden Gleitkörper ist ein individuelles Spannelement zugeordnet. Dadurch kann jeder Gleitkörper separat montiert und eingestellt werden. Dies hat den Vorteil, dass mittels eines Spannelements die Spannkraft zur Verspannung des Gleitkörpers in der jeweiligen zu dem Gleitkörper korrespondierenden Führungsnut einzeln vorgegeben werden kann. Somit ist ein erster Gleitkörper in einer dazu korrespondierenden ersten Führungsnut und ein zweiter Gleitkörper in einer dazu korrespondierenden zweiten Führungsnut angeordnet. Gegenüber dem Stand der Technik mit einem einzigen, durch beide Gleitkörper durchgehenden, starren Spannbolzen kann die Spannkraft optimiert zwischen Höhenverstellhebel und Manteleinheit in den jeweiligen Gleitkörper eingeleitet werden, wodurch die Spannkraft einfacher und genauer vorgegeben und eventuelle Bauteiltoleranzen besser ausgeglichen werden können.

Erfindungsgemäß ist vorgesehen, dass ein Spannelement einen eine Führungsnut aufweisenden Ansatz der Manteleinheit durchsetzt. Der Ansatz kann als von dem Mantelrohr abstehender Steg ausgebildet sein, der sich parallel in Längsrichtung erstreckt. Mit seiner Außenseite liegt der Ansatz an der Innenseite einer Seitenwange an. Auf seiner Innenseite weist der Ansatz eine Führungsnut auf, die ein in Längsrichtung langgestrecktes Langloch aufweist, und in der ein Gleitkörper angeordnet ist. Der Gleitkörper ist in Spannrichtung zugfest mit einem Spannelement verbunden, welches sich durch das Langloch der Führungsnut und eine damit fluchtende, nach außen durchgehende Öffnung in der Seitenwange erstreckt. Das Spannelement stützt sich von außen gegen die Außenseite der Seitenwange ab und übt die Spannkraft als nach außen gerichtete Zugkraft auf den Gleitkörper aus, der dadurch in der Führungsnut verspannt wird.

In einer vorteilhaften Weiterbildung kann es vorgesehen sein, dass die Spannrichtung orthogonal zur Längsachse ausgerichtet ist. Besonders bevorzugt ist die Spannrichtung versetzt gegenüber der Längsachse angeordnet, sprich die Spannrichtung, die entlang der Gelenkachse wirkt, ist zu der Längsachse beabstandet. Bevorzugt ist die Gelenkachse zu der Längsachse beabstandet. Somit schneiden sich die Gelenkachse und die Längsachse nicht.

In einer vorteilhaften Weiterbildung kann es vorgesehen sein, dass die Führungsnuten in dem Höhenverstellhebel und/oder in der Manteleinheit ausgebildet sind. Somit können entweder alle Führungsnuten, die korrespondierend zu den jeweiligem Gleitkörper ausgebildet sind, in dem Höhenverstellhebel oder in der Manteleinheit ausgebildet sein oder eine Führungsnut ist in dem Höhenverstellhebel ausgebildet und eine weitere Führungsnut ist in der Manteleinheit ausgebildet.

Es ist ebenfalls denkbar und möglich, dass mehr als zwei Gleitkörper und demzufolge auch mehr als zwei Führungsnuten und Spannelemente vorgesehen sind.

Das Spannelement kann in Spannrichtung an dem Höhenverstellhebel angebracht und abgestützt sein, und die Spannkraft auf den zugeordneten Gleitkörper ausüben, mit welcher dieser gegen die Führungsnut an dem Höhenverstellhebel belastet wird. Alternativ kann das Spannelement an der Seitenwange des Höhenverstellhebels abgestützt sein und den Gleitkörper gegen die Führungsnut an der Manteleinheit belasten.

Durch die erfindungsgemäß zwei Spannelemente kann außerdem die Gestaltungsfreiheit bei der Konstruktion der Lenksäule vergrößert werde, beispielsweise um einen zur Verfügung stehenden Bauraum besser ausnutzen zu können.

Vorteilhaft ist weiterhin, dass eine mechanische Überbestimmung bei der Anordnung und Ausrichtung der beiden Gleitkörper in den beiden Führungsnuten, die durch die starre Verbindung der Gleitkörper durch den einen durchgehenden Spannbolzen im Stand der Technik auftreten kann, durch die erfindungsgemäß separierte Verspannung besser ausgeglichen werden kann.

Eine vorteilhafte Ausführung sieht vor, dass der Gleitkörper in Spannrichtung an dem Spannelement festgelegt. Anders als im Stand der Technik, bei dem die Gleitkörper in der Spannrichtung verschiebbar, also fliegend auf dem Spannbolzen angeordnet sind, kann erfindungsgemäß jeweils ein Gleitkörper an dem zugeordneten Spannelement in der Spannrichtung individuell abgestützt sein. Hierzu zwischen dem Gleitkörper eine in Spannrichtung wirksame, formschlüssige, kraftschlüssige und/oder stoffschlüssige Verbindung ausgebildet sein. Bevorzugt ist eine formschlüssige Verbindung, bei welcher der Gleitkörper in Spannrichtung unverschiebbar an dem Spannelement angreift oder festgelegt ist, beispielsweise durch Abstützung gegen eine Stirnseite oder einen Vorsprung oder ein Formschlusselement des Spannelements. Bevorzugt kann der Gleitkörper direkt mit dem Spannelement verbunden sein oder daran anliegen, wobei insbesondere nicht die Seitenwange oder die Manteleinheit zwischen dem Spannelement und dem Gleitkörper angeordnet ist, und insbesondere nicht wie im Stand der Technik, bei dem beide Seitenwangen und die Manteleinheit zwischen den beiden Gleitkörpern und dem Spannbolzen angeordnet sind. Ein Vorteil dabei ist, dass die Spannkraft einfacher und genauer vorgegeben werden kann.

Es kann bevorzugt vorgesehen sein, dass ein Spannelement in Spannrichtung verstellbar ist. Jedes Spannelement kann auf seiner der Führungsnut abgewandten Seite gegen den Höhenverstellhebel oder die Manteleinheit abgestützt sein, und mit seiner anderen Seite in Richtung auf die Führungsnut gegen den Gleitkörper. Dadurch, dass das Spannelement in Spannrichtung, quer zur Längsachse verstellbar relativ zum Höhenverstellhebel oder zur Manteleinheit ausgebildet und angebracht ist, kann durch Verstellen der Abstand zur Führungsnut variiert werden, wodurch die Spannkraft einfach für jedes der Gleitelemente einstellbar ist.

In einer vorteilhaften Ausführung ist ein Spannelement als Gewindebolzen ausgebildet. Der Gewindebolzen weist einen Gewindeabschnitt auf, der vorzugsweise in ein korrespondierendes Gewinde in dem Gleitelement oder der Manteleinheit eingreift. Die Schraubverbindung ermöglich eine einfache und belastbare Befestigung in der Spannrichtung, beispielsweise um das Gleitelement an dem Spannelement festzulegen. Alternativ oder zusätzlich kann eine Schraubverbindung zwischen dem Spannelement und der Manteleinheit ausgebildet sein, oder zwischen dem Spannelement und der Seitenwange. Durch relative Drehung des Gewindebolzens kann der Abstand und damit die Spannkraft für jedes Gleitelement individuell eingestellt werden.

Es ist möglich, dass der Gewindebolzen mit dem Gleitelement und/oder der Manteleinheit und/oder der Seitenwange verschraubt ist. Der Gewindeabschnitt kann dabei unmittelbar in ein korrespondierendes Gewinde in dem Gleitelement, oder der Manteleinheit bzw. der Seitenwange eingreifen. Alternativ kann eine in Spannrichtung abgestützte Mutter vorgesehen sein.

Es kann vorgesehen sein, dass das Spannelement ein Federelement aufweist. Ein Federelement kann beispielsweise eine oder mehrere Tellerfedern, Wellfedern oder dergleichen aufweisen, die in Spannrichtung gegen die Manteleinheit oder die Seitenwange abgestützt sind, so dass sie den Gleitkörper mit einer Federspannung gegen die Führungsnut elastisch belasten. Dadurch können Toleranzen aufgrund wechselnder Betriebsbedingungen einfach selbsttätig ausgeglichen werden. Das Federelement kann auch zusätzlich auf einem Gewindebolzen angeordnet sein, der mit dem Gleitelement zusammenwirkt. Dadurch kann eine einfache Verstellung der wirksamen Federspannung und damit der Spannkraft erfolgen.

Eine vorteilhafte Ausführung ist, dass eine Führungsnut auf einer der Längsachse zugewandten Innenseite der Seitenwange angeordnet ist. Dabei ist jeweils eine Führungsnut auf einer Innenseite der Manteleinheit oder der einer Seitenwange des Höhenverstellhebels angeordnet. Die beiden Führungsnuten können sich bevorzugt mit ihren Öffnungen, in welche die Gleitkörper eingesetzt sind, bezüglich einer senkrecht zur Spannrichtung stehenden, die Längsachse aufweisenden Spiegelebene spiegelbildlich gegenüberliegen. Die innenseitige Anordnung ermöglicht eine besonders kompakte Bauweise der Führung, und eine schlankere Bauform als bei den im Stand der Technik außen liegenden Führungsnuten.

Bevorzugt kann das Spannelement als Gewindebolzen ausgebildet sein, der zur Übertragung der Spannkraft in ein korrespondierendes Gewinde in dem Gleitkörper eingeschraubt ist, und der sich von außen an der Seitenwange über einen Kopf (Bolzenkopf) abstützt. Die Verspannung des Gleitkörpers kann einfach durch Ein- oder Ausschrauben des Gewindebolzens eingestellt werden.

Bevorzugt ist die vorgenannten Ausführung eine spiegelsymmetrische Anordnung, bei der zwei Ansätze an der Manteleinheit spiegelbildlich zu einer senkrecht zur Spannrichtung stehenden, die Längsachse aufweisenden Spiegelebene angeordnet sind. Die Führungen mit den einender innen gegenüberliegenden Führungsnuten und den Gleitkörpern können raumsparend und geschützt zwischen den Ansätzen angeordnet sein. Dank der separaten Spannelemente kann für jede der beiden Führungen die Spannkraft unabhängig voneinander eingestellt werden.

Die die Spannelemente können jeweils in einer Seitenwange um die Gelenkachse drehbar gelagert sein. Dadurch können die Spannelemente, die bevorzugt Spannbolzen aufweisen können, als Gelenkbolzen zwischen Höhenverstellhebel und Manteleinheit dienen.

Es ist möglich, dass das Gleitelement und/oder die Führungsnut und/oder die Manteleinheit und/oder die Seitenwange bevorzugt an Kontaktflächen zumindest abschnittweise eine reibungsvermindernde Beschichtung aufweisen, oder zwischen Kontaktflächen ein reibungsverminderndes Zwischenelement eingefügt ist, beispielsweise eine beschichtete Gleitscheibe. Durch eine Gleitbeschichtung, beispielsweise eine PTFE (Polytetrafluorethylen)-Beschichtung auf zumindest einer der gegeneinander anliegenden und beim Verstellen relativ zueinander bewegten Kontaktflächen ist eine leichtgängige Verstellung gewährleistet. Beispielsweise können der Gleitkörper und/oder die Führungsnut eine Gleitbeschichtung aufweisen. Eine vergleichbare Wirkung kann durch ein Zwischenelement erreicht werden, welche ein derart reibungsminderndes Material aufweist und zwischen zwei Kontaktflächen eingefügt ist, beispielsweise als Gleitscheibe.

Bevorzugt ist der Höhenverstellhebel an einer Trageinheit angelenkt. Die Trageinheit kann bevorzugt als Konsole ausgebildet sein, die mit dem Kraftfahrzeug verbindbar ist.

Bevorzugt kann die Erfindung an einer elektrisch verstellbaren Lenksäule realisiert sein. Diese weist einen elektrischer Verstellantrieb auf, beispielsweise einen motorisch antreibbaren Spindeltrieb, der zur Höhenverstellung der Manteleinheit mit der darin gelagerten Lenkspindel zwischen der Höhenverstellhebel und der Trageinheit angeordnet ist.

Die Lenksäule kann dadurch in Richtung der Längsachse längsverstellbar ausgestaltet sein, dass die Manteleinheit ein unteres Mantelrohr aufweist, häufig auch als äußeres Mantelrohr, Außenmantelrohr oder Führungskasten bezeichnet, welches über eine Trageinheit mit der Karosserie eines Kraftfahrzeugs verbindbar ist. Dieses Außenmantelrohr weist die Führungsnuten der Manteleinheit auf, und nimmt ein oberes Mantelrohr, häufig auch als inneres Mantelrohr oder Innenmantelrohr bezeichnet, in Richtung der Längsachse teleskopartig verstellbar auf. Die Längsverstellung kann durch axiales Einschieben oder Herausziehen des Innenmantelrohrs aus dem Außenmantelrohr erfolgen. Zur teleskopierenden Längsverstellung kann ebenfalls ein motorischer Verstellantrieb vorgesehen sein, der an den Mantelrohren axial, in Längsrichtung angreift.

In einer vorteilhaften Weiterbildung erstreckt sich die Gelenkachse orthogonal zur Längsachse, wobei die Gelenkachse oberhalb der Längsachse verläuft und der Hebelarm des Höhenverstellhebels an seinem freien Ende unterhalb der Längsachse mit dem Verstellantrieb gekoppelt ist. Mit anderen Worten ist die Gelenkachse und die Kopplungsstelle des Höhenverstellhebels mit dem Verstellantrieb auf gegenüberliegenden Seiten bezogen auf eine Bezugsebene angeordnet, wobei die Bezugsebene durch die Längsachse verläuft und diese Bezugsebene parallel zur Gelenkachse ausgerichtet ist.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Darstellung,
- Figur 2: die Lenksäule gemäß Figur 1 in einer weiteren perspektivischen Darstellung,
- Figur 3: eine vergrößerte Detailansicht der Lenksäule gemäß Figur 2,
- Figur 4: die Lenksäule gemäß Figur 1 in einer teilweise auseinander gezogenen perspektivischen Darstellung,
- Figur 5: einen Querschnitt durch die Lenksäule gemäß Figur 1,
- Figur 6: eine vergrößerte Detailansicht des Querschnitts gemäß Figur 5 entlang der Gelenkachse durch eine erfindungsgemäße Führung in einer ersten Ausführungsform,
- Figur 7: eine Lenksäule nach dem Stand der Technik in einer perspektivischen Darstellung,
- Figur 8: die Lenksäule gemäß Figur 7 in einer teilweise auseinander gezogenen perspektivischen Darstellung,
- Figur 9: einen Querschnitt durch die Lenksäule gemäß Figur 7,
- Figur 10: eine vergrößerte Detailansicht gemäß Figur 9 entlang der Gelenkachse durch eine Führung in einer zweiten Ausführungsform.
- Figur 11: eine vergrößerte Detailansicht gemäß Figur 9 entlang der Gelenkachse durch eine Führung in einer dritten Ausführungsform,
- Figur 12: eine vergrößerte Detailansicht gemäß Figur 9 entlang der Gelenkachse durch eine Führung in einer vierten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

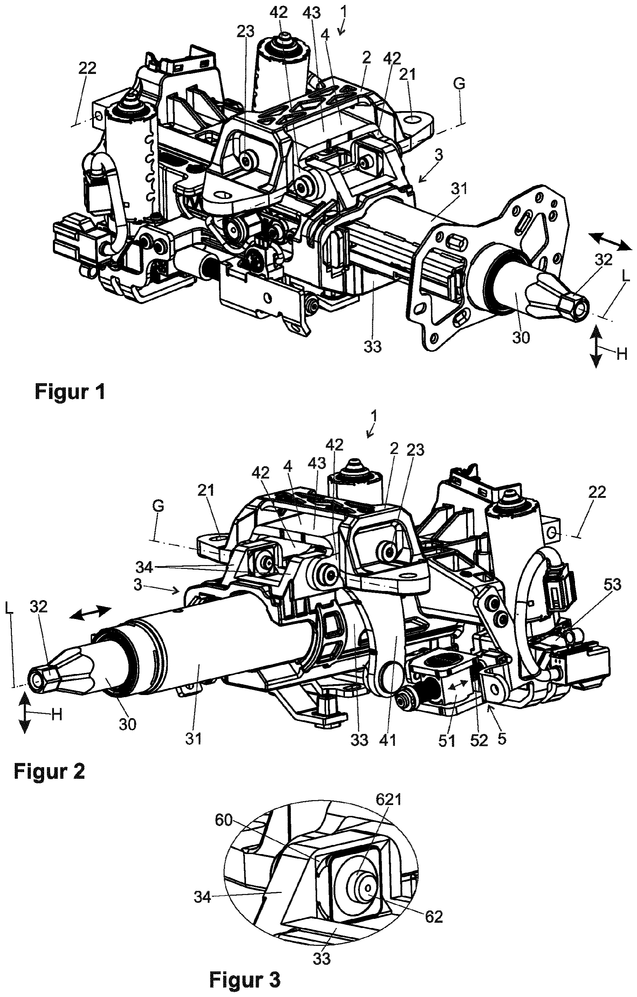

In den Figuren 1 und 2 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

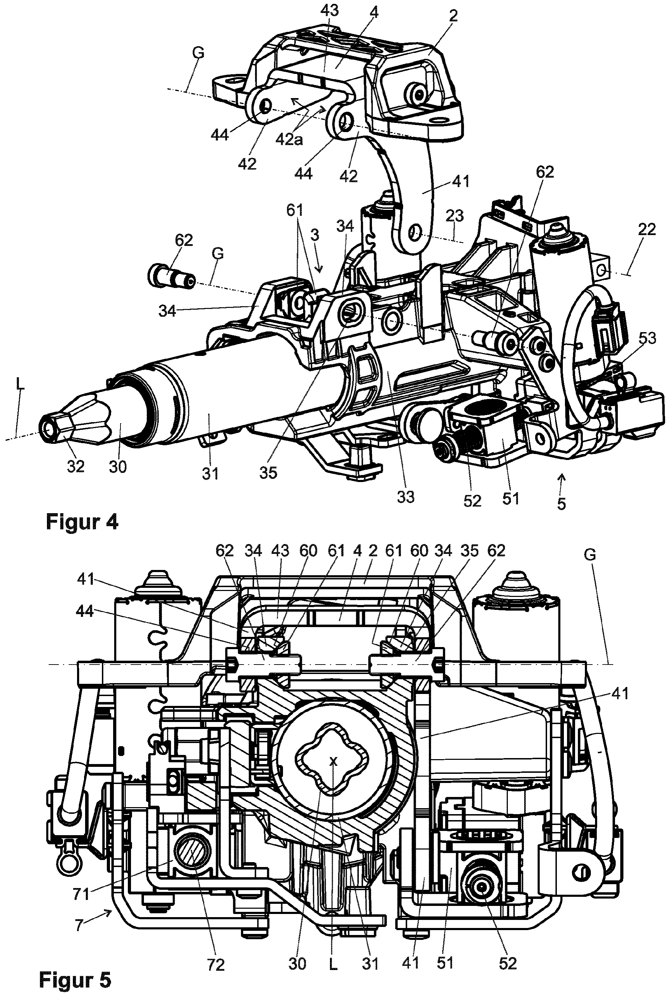

Die Lenksäule 1 kann an der Karosserie eines nicht dargestellten Kraftfahrzeugs mittels einer Trageinheit 2 befestigt werden, auch als Konsole bezeichnet, der Übersichtlichkeit halber in der Ansicht von Figur 4 nach oben abgehoben dargestellt ist. Die Trageinheit 2 umfasst zur Verbindung mit der Karosserie Befestigungsmittel 21.

In einer Manteleinheit 3 ist eine Lenkspindel 30 in einem Innenmantel 31, auch als Innenmantelrohr, oberes oder inneres Mantelrohr bezeichnet, um ihre Längsachse L, die sich in Längsrichtung nach vorn erstreckt, drehbar gelagert. Hinten an der Lenkspindel 30 ist ein Befestigungsabschnitt 32 zur Befestigung eines nicht dargestellten Lenkrads ausgebildet. Der Innenmantel 31 ist in einem Außenmantel 33, auch als Außenmantelrohr, äußeres oder unteres Mantelrohr bezeichnet, in Längsrichtung, d.h. in Richtung der Längsachse L teleskopartig verschiebbar gehaltert, wie mit dem Doppelpfeil angedeutet. Wirkmäßig kann zwischen dem Innenmantel 31 und dem Außenmantel 33 eine Energieabsorptionseinrichtung vorgesehen sein, die zumindest ein Deformationselement aufweist, welches im Fall eines Fahrzeugcrashs plastisch deformiert wird. Solche Vorrichtungen sind dem Fachmann aus dem Stand der Technik hinreichend bekannt.

Zur Höhenverstellung ist die Manteleinheit 3 um eine im unteren bzw. bezüglich der Fahrrichtung vorderen Bereich liegende, horizontale Höhenverstellachse 22 verschwenkbar, so dass ein hinten bzw. oben am Befestigungsabschnitt 32 angebrachtes Lenkrad in Höhenrichtung H nach oben oder unten verstellbar ist.

Ein Höhenverstellhebel 4 ist an der Trageinheit 2 um eine horizontal, quer zu Längsachse L liegende Hebelachse 23 drehbar gelagert. An einem eingangsseitigen Hebelarm 41 greift ein motorischer Verstellantrieb 5 an, der als Rotationsspindeltrieb ausgebildet ist, mit einer Spindelmutter 51, die mittels eines Verbindungsbolzens 54 mit dem freien Ende des Hebelarms 41 verbunden ist. In die Spindelmutter 51 greift eine Gewindespindel 52 ein, die von einer elektromotorischen Antriebseinheit 53 drehend antreibbar ist. Die Antriebseinheit 53 stützt sich in Richtung der Längsachse L an der Manteleinheit 33 ab. Durch eine motorisch angetriebene Rotation der Gewindespindel 52 wird die Spindelmutter 51 translatorisch relativ zur Manteleinheit 33 bewegt, wie mit dem Doppelpfeil angedeutet ist, wodurch der Höhenverstellhebel 4 um die Höhenverstellachse 23 verschwenkt wird.

Der ausgangsseitige Hebelarm des Höhenverstellhebels 4 weist zwei Seitenwangen 42 auf, die sich ausgehend von einem quer zur Längsachse L waagerecht liegenden Verbindungsteil 43 nach unten erstrecken, so dass ein U-förmiges Profil des Höhenverstellhebels 4 gebildet wird, wie dies in der auseinander gezogenen Darstellung von Figur 4 und dem Querschnitt von Figur 5 gut erkennbar ist. Die zwei Seitenwangen 42 und das Verbindungsteil 43 sind als ein einstückiges integrales Bauteil ausgebildet, bevorzugt als Stanz-Biege-Bauteil.

Zwischen den gegeneinander gerichteten Innenseiten 42a der Seitenwangen 42 ist der Außenmantel 33 der Manteleinheit 3 aufgenommen. Im freien Endbereich der Seitenwangen 42 befindet sich eine quer zur Längsachse L verlaufende Gelenkachse G. Die Gelenkachse G ist oberhalb der Längsachse L angeordnet, so dass die Achsen sich nicht schneiden. Die Gelenkachse G durchdringt nicht das Innenmantelrohr 31, mit anderen Worten verläuft die Längsachse L oberhalb des Innenmantelrohrs 31.

Die Manteleinheit 33 ist um die horizontale Höhenverstellachse 22 verschwenkbar an einem fahrzeugfesten, nicht dargestellten Bauteil gelagert. Wird die Manteleinheit 33 zur Höhenverstellung um die Höhenverstellachse 22 verschwenkt, wird der Höhenverstellhebel 4 um die Hebelachse 23 verschwenkt. Dadurch, dass die Hebelachse 23 und die Höhenverstellachse 22 zueinander beabstandet sind, und somit die Drehachsen nicht zusammenfallen, werden diese dabei relativ zueinander in Richtung der Längsachse, in Längsrichtung verlagert. Dadurch ist ein Längsausgleich erforderlich. Dazu ist die Gelenkachse G in Längsrichtung, d.h. in Richtung der Längsachse L relativ zur Manteleinheit 33 in einer Gleitführung in Längsrichtung verschiebbar gelagert, wie im Folgenden erläutert wird.

Die Manteleinheit 3 weist am Außenmantel 3 zwei nach oben vorstehende, in Längsrichtung langgestreckte stegartige Ansätze 34 auf. Die Ansätze 34 sind quer zur Längsachse L, in Richtung der Gelenkachse G voneinander beabstandet und weisen jeweils ein quer zur Gelenkachse durchgehendes, in Längsrichtung erstrecktes Langloch 35 auf. Auf ihren gegeneinander gerichteten Innenseiten weisen die Ansätze 34 jeweils eine Führungsnut 60 auf, die einen V-förmigen Querschnitt hat und in Längsrichtung langgestreckt ist. Das Langloch 35 ist jeweils am Grund der Führungsnuten 60 angeordnet.

In jeder Führungsnut 60 ist ein Gleitkörper 61 eingesetzt, der als Nutstein mit einem korrespondierenden, V-förmigen Außenprofil geformt und in Längsrichtung in der Führungsnut 60 gleitend verschiebbar ist. Diese Anordnung an dem linksseitigen Ansatz 34 ist in Figur 3 vergrößert dargestellt.

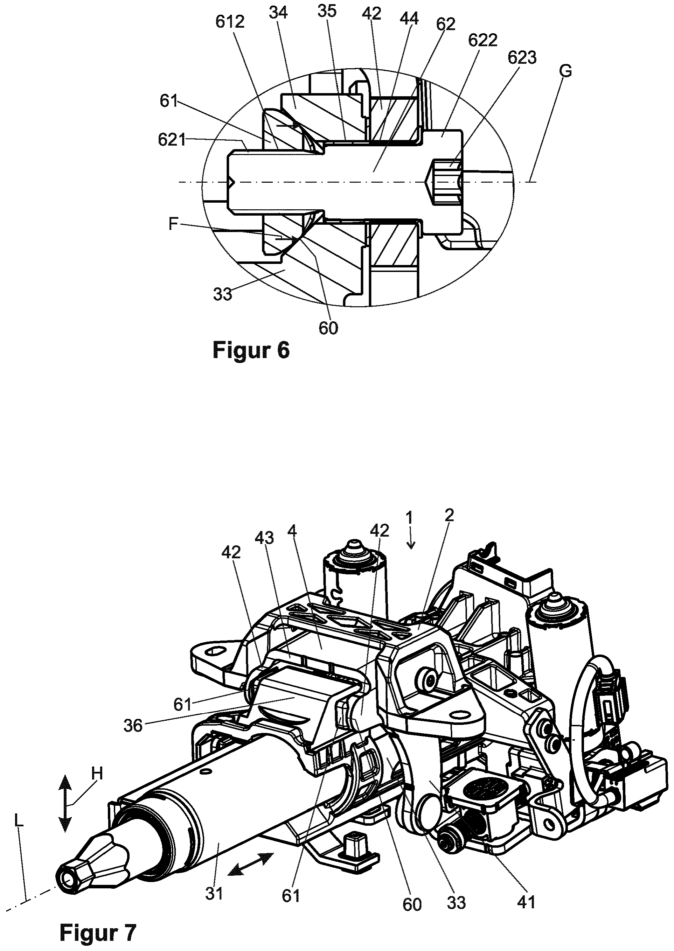

Jeweils ein als Gewindebolzen 62 ausgebildetes erfindungsgemäßes Spannelement ist durch eine Seitenwange 42 durchsetzende Bohrung 44 und ein Langloch 35 eines Ansatzes 34 hindurchgeführt, wie sich aus Figur 4 und dem Querschnitt von Figur 5 deutlich ergibt. Der Gewindebolzen ist in der Bohrung 44 drehbar gelagert und weist ein Gewinde 621 (Außengewinde) auf, das in ein korrespondierendes Innengewinde 612 des Gleitkörpers 61 eingeschraubt ist, wie in der vergrößerten Schnittdarstellung von Figur 6 erkennbar ist. Mit einem Bolzenkopf 622 stützt sich der Gewindebolzen 62 in Richtung der Gelenkachse G von außen an der Seitenwange 42 ab.

Durch Anziehen des Gewindebolzens 62 in dem Gewinde 612, 622 kann der Gleitkörper 61 in einer Spannrichtung in der Führungsnut 60 verspannt werden, wie in Figur 6 mit den Pfeilen angedeutet. Entsprechend ist die Spannrichtung identisch mit der Richtung der Gelenkachse G.

Außen an dem Bolzenkopf 622 ist ein Werkzeugansatz 623 ausgebildet, beispielsweise ein Innensechskant. Mittels eines geeigneten Werkzeugs kann der Gewindebolzen 62 in den Gleitkörper 61 eingeschraubt oder gelöst werden, wodurch die zwischen den gegeneinander anliegenden, aufeinander gleitenden V-förmigen Kontaktflächen wirkende Spannkraft F eingestellt werden kann. Die Spannkraft F kann durch die erfindungsgemäße Anordnung mit zwei separaten Gewindebolzen 62 für jede der beiden Führungsnuten 60 und Gleitkörper 61 separat und unabhängig voneinander eingestellt werden.

Zur Längsverstellung kann ein zweiter Verstellantrieb 7 vorgesehen sein, der wie der erste Verstellantrieb 5 als Spindeltrieb ausgebildet sein kann, mit einer Spindelmutter 71, in die eine relativ dazu von einer motorischen Antriebseinheit 73 drehend antreibbare Gewindespindel 72 eingeschraubt ist. Dadurch, dass dich die Gewindespindel 72 in Richtung der Längsachse L an der Manteleinheit 33 abstützt, und die Spindelmutter 71 an dem Innenmantelrohr 31, kann dieses teleskopierend relativ zur Manteleinheit 33 verstellt werden.

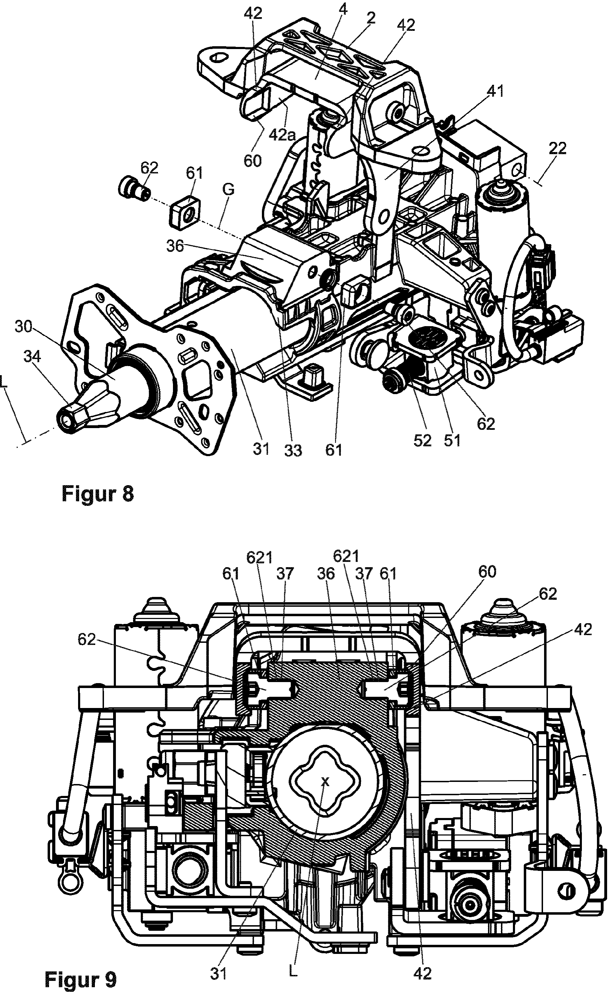

Weitere Ausführungen der Erfindung sind in den Figuren 7 bis 12 dargestellt, wobei für gleichwirkende Teile dieselben Bezugszeichen verwendet werden.

Abweichend von der ersten Ausführung weist der Außenmantel 33 nur einen einzigen, in Längsrichtung langestreckten Ansatz 36 auf, dessen beiderseits der Längsachse L parallel verlaufende Außenseiten den Innenseiten 42a der Seitenwangen 42 zugewandt sind.

Auf der Innenseite 42a jeder der Seitenwangen 42 ist eine Führungsnut 60 ausgebildet, die entsprechend der ersten Ausführung ausgestaltet sein kann.

Jeweils ein Gleitkörper 61 ist zwischen dem Ansatz 36 und einer Seitenwange 42 angeordnet und in der zugeordneten Führungsnut 60 in Längsrichtung gleitend verschiebbar.

Jeweils ein als Gewindebolzen 62 ausgebildetes Spannelement ist in einem Langloch 45 am Grund der Führungsnut 60 um die Gelenkachse G drehbar und in Längsrichtung verlagerbar aufgenommen. Mit dem Gewinde 621 ist der Gewindebolzen 62 in eine Gewindebohrung 37 in dem Vorsprung 37 eingeschraubt.

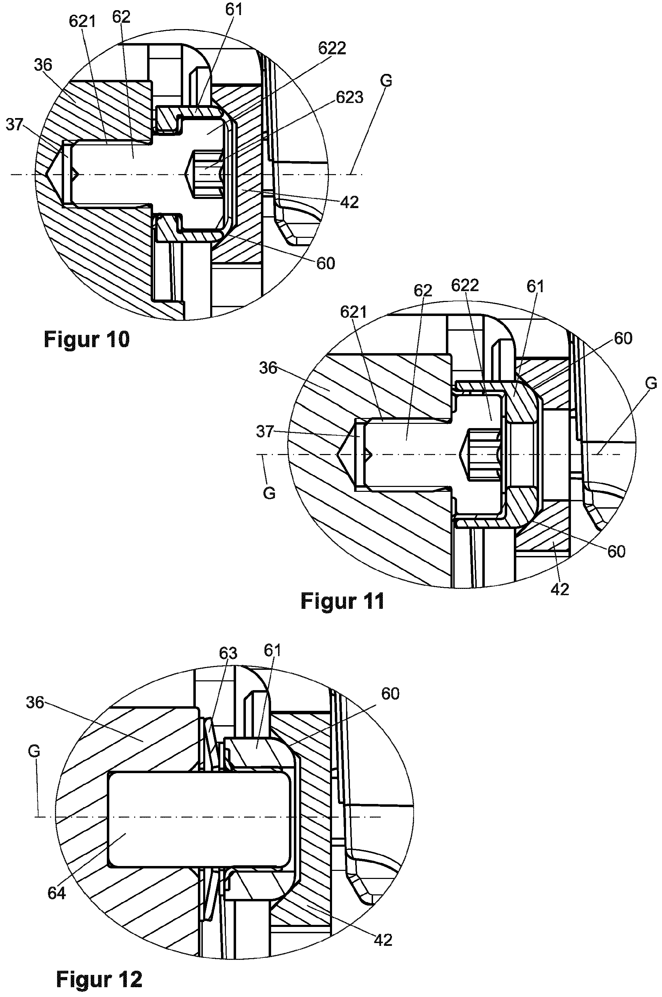

Der Gleitkörper 61 kann wie in der in Figur 10 im Schnitt dargestellten zweiten Ausführung auf dem Gewindebolzen 62 angeordnet sein, wobei dieser durch den Gleitkörper 61 hindurchgeht.

Alternativ kann der Gleitkörper 61 kappenförmig ausgebildet und wie in der dritten Ausführung gemäß Figur 11 von außen stirnseitig auf den Bolzenkopf 622 aufgesetzt, und stirnseitig in Richtung der Gelenkachse G dagegen abgestützt sein.

Durch Ein- oder Ausschrauben des Gewindebolzens 62 in der Gewindebohrung 37 kann der Abstand zur Innenseite einer Seitenwange 42 jeweils separat eingestellt werden. Dadurch ist die Spannkraft einstellbar, mit der die Gleitkörper 61 in den Führungsnuten 61 verspannt sind. In einer vorteilhaften Weiterbildung können die Seitenwangen 42 eine Öffnung aufweisen, durch die ein nicht dargestelltes Werkzeug hindurchführbar ist um mit dem Gewindebolzen 62 in Wirkeingriff gebracht zu werden, um diesen ein- oder auszuschrauben.

Eine weitere mögliche Variante ist in Figur 12 gezeigt. Darin weist das Spannelement ein Federelement, nämlich eine Tellerfeder 63 auf. Diese stützt sich gegen die Außenseite des Ansatzes 36 ab, und belastet den Gleitkörper 61 mit einer in Richtung der Gelenkachse G nach außen gerichteten elastischen Spannkraft gegen die Führungsnut 60. Die Tellerfeder 63 und der Gleitkörper 61 können auf einem in den Ansatz 36 eingesetzten Führungsbolzen 64 in Richtung der Gelenkachse G geführt sein.

Es ist auch denkbar und möglich, ein Federelement ähnlich der in Figur 12 gezeigten Tellerfeder 63 bei einer der Ausführungen gemäß der Figuren 1 bis 11 mit dem Gewindebolzen 62 zu kombinieren, um die auf das Gleitelement 61 ausgeübte Spannkraft elastisch zu gestalten.

### Bezugszeichenliste

- 1: Lenksäule
- 2: Trageinheit
- 21: Befestigungsmittel
- 22: Höhenverstellachse
- 23: Hebelachse
- 3: Manteleinheit
- 30: Lenkspindel
- 31: Innenmantel
- 32: Befestigungsabschnitt
- 33: Außenmantel
- 34: Ansatz
- 35: Langloch
- 36: Ansatz
- 37: Gewindebohrung
- 4: Höhenverstellhebel
- 41: Hebelarm
- 42: Seitenwangen
- 43: Verbindungsteil
- 44: Bohrung
- 45: Langloch
- 5,7: Verstellantrieb
- 51, 71: Spindelmutter
- 52, 72: Gewindespindel
- 53, 73: Antriebseinheit
- 60: Führungsnuten
- 61: Gleitkörper
- 612: Innengewinde
- 613: Durchgangsbohrung
- 62: Gewindebolzen (Spannelement)
- 621: Gewinde
- 622: Bolzenkopf
- 623: Werkzeugansatz
- 63: Tellerfeder
- 64: Führungsbolzen
- F: Spannkraft
- G: Gelenkachse
- H: Höhenrichtung
- L: Längsachse

## Patentansprüche

1. Lenksäule (1) für ein Kraftfahrzeug, umfassend eine Manteleinheit (3), in der eine Lenkspindel (30) um eine Längsachse (L) drehbar gelagert ist und die über einen Höhenverstellhebel (4) mit der Karosserie eines Kraftfahrzeugs direkt oder indirekt verbindbar ist, wobei der Höhenverstellhebel (4) zwei Seitenwangen (42) aufweist, zwischen deren einander bezüglich der Längsachse (L) gegenüberliegenden Innenseiten (42a) die Manteleinheit (3) um eine Gelenkachse (G) verschwenkbar aufgenommen ist, wobei zwischen der Manteleinheit (3) und jeder Seitenwange (42) ein Gleitkörper (61) verspannbar angeordnet ist, der in einer korrespondierenden Führungsnut (60) in Richtung der Längsachse (L) gleitend verschiebbar gehalten und von einer Spanneinrichtung mit mindestens einem Spannelement (62) in einer Spannrichtung verspannt ist, wobei jeder der Gleitkörper (61) einzeln mit einem separaten Spannelement (62) in der korrespondierenden Führungsnut (60) verspannbar ist, und wobei ein Spannelement (62) eine Seitenwange (42) des Höhenverstellhebels (4) durchsetzt,
**dadurch gekennzeichnet,**
**dass** ein Spannelement (62) einen die Führungsnut (60) aufweisenden Ansatz (34) der Manteleinheit (3) durchsetzt, wobei der Ansatz (34) die Führungsnut (60) auf seiner Innenseite aufweist.

2. Lenksäule nach Anspruch 1, **dadurch gekennzeichnet, dass** die Führungsnuten (60) in dem Höhenverstellhebel (4) und/oder in der Manteleinheit (3) ausgebildet sind.

3. Lenksäule nach Anspruch 1 oder 2, **dadurch gekennzeichnet, dass** der Gleitkörper (61) in Spannrichtung an dem Spannelement (62) abgestützt ist.

4. Lenksäule nach einem der vorangehenden Ansprüche, **dadurch gekennzeichnet, dass** ein Spannelement (62) in Spannrichtung verstellbar ist.

5. Lenksäule nach einem der vorangehenden Ansprüche, **dadurch gekennzeichnet, dass** ein Spannelement (62) als Gewindebolzen ausgebildet ist.

6. Lenksäule nach Anspruch 5, **dadurch gekennzeichnet, dass** der Gewindebolzen (62) mit dem Gleitelement (61) und/oder der Manteleinheit (3) und/oder der Seitenwange (42) verschraubt ist.

7. Lenksäule nach einem der vorangehenden Ansprüche, **dadurch gekennzeichnet, dass** das Spannelement ein Federelement (63) aufweist.

8. Lenksäule nach einem der vorangehenden Ansprüche, **dadurch gekennzeichnet, dass** eine Führungsnut (60) auf einer der Längsachse (L) zugewandten Innenseite (42a) der Seitenwange (42) angeordnet ist.

9. Lenksäule nach einem der vorangehenden Ansprüche, **dadurch gekennzeichnet, dass** die Spannelemente (62) jeweils in einer Seitenwange (42) um die Gelenkachse (G) drehbar gelagert sind.

10. Lenksäule nach einem der vorangehenden Ansprüche, **dadurch gekennzeichnet, dass** das Gleitelement (61), die Führungsnut (60), die Manteleinheit (3) und/oder die Seitenwange (42) an Kontaktflächen eine reibungsvermindernde Beschichtung aufweisen, oder zwischen Kontaktflächen ein reibungsverminderndes Zwischenelement aufweisen.

## Claims

1. Steering column (1) for a motor vehicle, comprising a jacket unit (3) in which a steering spindle (30) is mounted rotatably about a longitudinal axis (L) and which can be connected directly or indirectly to the body of a motor vehicle via a height adjustment lever (4), the height adjustment lever (4) having two side cheeks (42), between the inner sides (42a) of which, opposite one another with respect to the longitudinal axis (L), the jacket unit (3) is accommodated pivotably about a hinge axis (G), wherein a sliding body (61) is arranged between the casing unit (3) and each side cheek (42) so as to be clampable, which sliding body is held in a corresponding guide groove (60) so as to be slidable in the direction of the longitudinal axis (L) and is clamped in a clamping direction by a clamping device with at least one clamping element (62), wherein each of the sliding bodies (61) can be individually clamped in the corresponding guide groove (60) by a separate clamping element (62), and wherein a clamping element (62) passes through a side cheek (42) of the height adjustment lever (4),
**characterized in**
**in that** a clamping element (62) passes through a projection (34), having the guide groove (60), of the casing unit (3), the projection (34) having the guide groove (60) on its inner side.

2. Steering column according to claim 1, **characterized in that** the guide grooves (60) are formed in the height adjustment lever (4) and/or in the casing unit (3).

3. Steering column according to claim 1 or 2, **characterized in that** the sliding body (61) is supported on the clamping element (62) in the clamping direction.

4. Steering column according to one of the preceding claims, **characterized in that** a clamping element (62) is adjustable in the clamping direction.

5. Steering column according to one of the preceding claims, **characterized in that** a clamping element (62) is designed as a threaded bolt.

6. Steering column according to claim 5, **characterized in that** the threaded bolt (62) is screwed to the sliding element (61) and/or the casing unit (3) and/or the side cheek (42).

7. Steering column according to one of the preceding claims, **characterized in that** the tensioning element has a spring element (63).

8. Steering column according to one of the preceding claims, **characterized in that** a guide groove (60) is arranged on an inner side (42a) of the side cheek (42) facing the longitudinal axis (L).

9. Steering column according to one of the preceding claims, **characterized in that** the clamping elements (62) are each mounted in a side cheek (42) so as to be rotatable about the hinge axis (G).

10. Steering column according to one of the preceding claims, **characterized in that** the sliding element (61), the guide groove (60), the casing unit (3) and/or the side cheek (42) have a friction-reducing coating on contact surfaces, or have a friction-reducing intermediate element between contact surfaces.

## Revendications

1. Colonne de direction (1) pour un véhicule automobile, comprenant une unité d'enveloppe (3) dans laquelle un arbre de direction (30) est monté à rotation autour d'un axe longitudinal (L) et qui peut être reliée directement ou indirectement à la carrosserie d'un véhicule automobile par l'intermédiaire d'un levier de réglage en hauteur (4), le levier de réglage en hauteur (4) présentant deux joues latérales (42) entre les côtés intérieurs (42a) opposés l'un à l'autre par rapport à l'axe longitudinal (L), l'unité d'enveloppe (3) étant logée de manière pivotante autour d'un axe d'articulation (G), un corps coulissant (61) étant disposé de manière à pouvoir être serré entre l'unité d'enveloppe (3) et chaque joue latérale (42), lequel est maintenu de manière à pouvoir coulisser dans une rainure de guidage (60) correspondante dans la direction de l'axe longitudinal (L) et est serré par un dispositif de serrage avec au moins un élément de serrage (62) dans une direction de serrage, chacun des corps coulissants (61) pouvant être serré individuellement avec un élément de serrage (62) séparé dans la rainure de guidage (60) correspondante, et un élément de serrage (62) traversant une joue latérale (42) du levier de réglage en hauteur (4),
**caractérisé en ce que**
qu'un élément de serrage (62) traverse un appendice (34) de l'unité d'enveloppe (3) présentant la rainure de guidage (60), l'appendice (34) présentant la rainure de guidage (60) sur son côté intérieur.

2. Colonne de direction selon la revendication 1, **caractérisée en ce que** les rainures de guidage (60) sont formées dans le levier de réglage en hauteur (4) et/ou dans l'unité d'enveloppe (3).

3. Colonne de direction selon la revendication 1 ou 2, **caractérisée en ce que** le corps coulissant (61) s'appuie dans la direction de serrage sur l'élément de serrage (62).

4. Colonne de direction selon l'une des revendications précédentes, **caractérisée en ce qu'**un élément de serrage (62) est réglable dans la direction de serrage.

5. Colonne de direction selon l'une des revendications précédentes, **caractérisée en ce qu'**un élément de serrage (62) est conçu comme un boulon fileté.

6. Colonne de direction selon la revendication 5, **caractérisée en ce que** le boulon fileté (62) est vissé à l'élément coulissant (61) et/ou à l'unité d'enveloppe (3) et/ou à la joue latérale (42).

7. Colonne de direction selon l'une des revendications précédentes, **caractérisée en ce que** l'élément de serrage comprend un élément de ressort (63).

8. Colonne de direction selon l'une des revendications précédentes, **caractérisée en ce qu'**une rainure de guidage (60) est disposée sur une face intérieure (42a) du montant latéral (42), tournée vers l'axe longitudinal (L).

9. Colonne de direction selon l'une des revendications précédentes, **caractérisée en ce que** les éléments de serrage (62) sont montés chacun dans une joue latérale (42) de manière à pouvoir tourner autour de l'axe d'articulation (G).

10. Colonne de direction selon l'une des revendications précédentes, **caractérisée en ce que** l'élément coulissant (61), la rainure de guidage (60), l'unité d'enveloppe (3) et/ou la joue latérale (42) présentent un revêtement réduisant la friction sur des surfaces de contact, ou présentent un élément intermédiaire réduisant la friction entre des surfaces de contact.
